# FASCICULE DE BREVET EUROPEEN

(11) **EP 0 657 352 B1**
(45) Date de publication et mention de la délivrance du brevet: **21.01.1998**
(21) Numéro de dépôt: 94402559.2
(22) Date de dépôt: 14.11.1994
(51) Int. Cl.: B64G 1/64, F41F 7/00

(54) **Ejecteur pneumatique**
Pneumatische Auswurfvorrichtung
Pneumatic ejector

(30) Priorité: 06.12.1993 FR 9314585
(43) Date de publication de la demande: 14.06.1995
(73) Titulaire: AEROSPATIALE Société Nationale Industrielle, 75016 Paris (FR)
(72) Inventeur: Aubret, Jean-Pierre, F-33200 Bordeaux (FR)
(74) Mandataire: Bonnetat, Christian

(56) Documents cités:
- EP-A- 0 454 564
- FR-A- 2 616 856
- FR-A- 2 616 857
- US-A- 3 196 745
- US-A- 3 529 417

## Description

La présente invention concerne un dispositif pour éjecter, par voie pneumatique, un objet par rapport à une structure.

Dans une application préférentielle de l'invention, les objets destinés à être éjectés de ladite structure par le dispositif sont plus particulièrement, quoique non exclusivement, des microsatellites qui peuvent être porteurs par exemple d'équipements ou d'appareils scientifiques et qui sont alors lancés à partir de satellites, selon une trajectoire prédéterminée pour atteindre une orbite souhaitée ou un objectif précis en suivant une phase balistique. Bien évidemment, le dispositif selon l'invention peut être également utilisé dans d'autres applications dans lesquelles un objet scientifique, militaire ou autre, doit être éjecté selon une trajectoire depuis une structure qui peut être celle d'un aéronef, d'un navire, d'un sous-marin, d'un véhicule ou d'une station terrestre, vers un emplacement ou une cible donné.

Des dispositifs d'éjection de ce type, dénommés également éjecteurs, sont déjà connus. Ils comprennent généralement un ensemble coulissant qui se compose d'un corps associé à la structure et d'un organe déplaçable monté coulissant sur le corps et supportant l'objet à éjecter. Des moyens pneumatiques sous pression sont par ailleurs prévus et ils communiquent avec ledit ensemble pour éjecter l'objet par coulissement de l'organe, portant l'objet, d'une position rentrée vers une position sortie. Et un mécanisme de retenue commandable verrouille l'objet sur l'organe coulissant lorsque le dispositif occupe une position initiale de stockage, l'organe étant alors en position rentrée. Lorsque le dispositif est actionné pour passer vers sa position finale d'éjection, le mécanisme de retenue libère l'objet dudit organe qui, sous l'action du gaz sous pression issu des moyens pneumatiques, coulisse vers sa position sortie pour éjecter l'objet suivant une trajectoire prédéterminée, qui dépend de la vitesse d'éjection de l'organe coulissant, elle-même fonction de la pression exercée sur celui-ci par les moyens pneumatiques.

Bien que ces dispositifs d'éjection connus donnent des résultats satisfaisants, ils présentent néanmoins des inconvénients. Tout d'abord, d'ordre structurel ; en effet, les moyens pneumatiques sous pression sont agencés à distance de l'ensemble coulissant, de sorte que des liaisons par conduits et raccords sont nécessaires, ce qui augmente la complexité et la masse du dispositif. Dans l'application spatiale de ces dispositifs, cela constitue un handicap important à cause de la masse et de l'encombrement supplémentaires engendrés par ces dispositifs à moyens pneumatiques d'éjection séparés. Ensuite, d'ordre fonctionnel ; en effet, malgré la présence de sécurités mécaniques notamment sur le passage des gaz sous pression, ces dispositifs peuvent être sujets à des fonctionnements intempestifs (effacement inopiné du mécanisme de retenue, par exemple), avec les conséquences que cela peut entraîner. En effet, puisque la pression à l'intérieur des moyens pneumatiques, à laquelle est soumis par la suite l'organe coulissant, est importante (plusieurs bars), le fonctionnement intempestif de l'éjecteur, lorsqu'il est dans une position initiale de stockage, au sol par exemple, se traduit par l'expulsion de l'objet avec une énergie maximale, fonction de la pression intérieure stockée.

Le document FR-A-2 616 856 montre un dispositif selon le préambule de la revendication 1.

La présente invention a pour but de remédier à ces inconvénients et concerne un dispositif d'éjection dont la conception contribue à réduire l'encombrement et la masse du dispositif et à minimiser son action en cas d'un fonctionnement intempestif.

A cet effet, le dispositif pour éjecter, par voie pneumatique, un objet par rapport à une structure, du type comportant :
- un ensemble coulissant qui comprend un corps, apte à être associé à ladite structure, et un organe déplaçable monté sur ledit corps et apte à supporter ledit objet ;
- des moyens pneumatiques pour éjecter ledit objet par coulissement dudit organe, portant l'objet, d'une position rentrée vers une position sortie ; et
- un mécanisme de retenue commandable, verrouillant ledit objet sur ledit organe, en position rentrée de celui-ci, et libérant ledit objet dudit organe pour l'actionnement desdits moyens d'éjection pneumatiques ;
est remarquable, selon l'invention, en ce que lesdits moyens d'éjection pneumatiques sont intégrés audit ensemble coulissant pour former avec celui-ci une capacité étanche, à volume variable, entre ledit organe et ledit corps, et en ce que ladite capacité étanche présente, en position de stockage dudit dispositif pour une pression extérieure initiale, un volume minimal sous une pression intérieure sensiblement identique à ladite pression extérieure initiale, et en position d'éjection, pour une pression extérieure finale inférieure à la pression extérieure initiale, un volume maximal sous l'action de ladite pression intérieure agissant sur ledit organe.

Ainsi, grâce à l'invention, l'agencement des moyens pneumatiques autour dudit ensemble coulissant, sous la forme d'une capacité étanche à volume variable, confère au dispositif une excellente compacité et une réduction de masse, ce qui est particulièrement appréciable pour une application spatiale. De plus, le dispositif utilise la variation de la pression extérieure au cours des différentes phases de vie du dispositif d'éjection pour assurer, d'une part, la sécurité de l'environnement lorsqu'il est en position initiale de stockage et, d'autre part, le lancement dudit objet, lorsqu'il passe en position finale d'éjection.

En effet, puisque la pression intérieure de la capacité est identique à la pression extérieure en position initiale de stockage au sol du dispositif (correspondant à la pression atmosphérique), l'éjection de l'objet, en cas de dysfonctionnement, se déroulera avec une énergie minimale due uniquement à la structure de la capacité étanche, et se traduira par une faible vitesse d'éjection de l'objet. En revanche, dans son application spatiale et lorsque le dispositif est commandé, l'éjection de l'objet s'effectuera avec une énergie maximale, puisque la différence de pression entre la pression intérieure du gaz stocké dans la capacité (égale à 1 bar) et la pression extérieure (proche de 0 bar) est maximale, à laquelle s'ajoute l'énergie intrinsèque de la structure de ladite capacité. L'objet suit alors la trajectoire pré-établie qui est fonction de l'énergie fournie.

Dans un mode préféré de réalisation, ladite capacité étanche est délimitée par un soufflet externe, entourant ledit ensemble et fixé, par ses extrémités, audit corps et audit organe, de façon étanche. On remarque la réalisation techniquement simple et fiable de ladite capacité étanche. En cas d'un fonctionnement intempestif du dispositif en position initiale de stockage, la seule force motrice susceptible d'éjecter l'objet est donnée ainsi par l'effort ressort du soufflet qui se traduit par une vitesse d'éjection relativement faible. Pour assurer une bonne tenue mécanique du soufflet externe, celui-ci est métallique et présente par exemple une section en zigzags de préférence ondulés.

Par exemple, ledit corps présente une partie cylindrique, le long de laquelle peut coulisser ledit organe, et une embase, qui termine ladite partie cylindrique et à laquelle est fixée, de façon étanche, l'une des extrémités dudit soufflet externe. Ledit organe coulissant peut être monté autour de ladite partie cylindrique dudit corps et présenter un plateau transversal sur lequel repose ledit objet à éjecter et auquel est fixée, de façon étanche, l'autre extrémité dudit soufflet.

Dans une première réalisation, ledit plateau dudit organe se prolonge par une jupe cylindrique montée coulissante et de façon étanche le long de la partie cylindrique dudit corps. Dans une seconde réalisation, entre ledit plateau transversal de l'organe coulissant et ladite embase du corps, est agencé, de façon étanche, un soufflet auxiliaire interne qui délimite avec ledit soufflet externe, le volume variable de ladite capacité étanche. Ainsi, en fonction de la vitesse d'éjection à transmettre, on choisira le ou les soufflets ayant les caractéristiques mécaniques les plus appropriées (raideur, nombre d'ondulations, flèche, ...). Avantageusement, une butée de fin de course dudit organe coulissant est prévue sur ledit corps.

Par ailleurs, ledit mécanisme de retenue commandable est agencé dans un passage axial traversant ledit ensemble, pour verrouiller ledit objet à éjecter sur l'organe coulissant dudit ensemble, en position rentrée.

Plus particulièrement, ledit mécanisme de retenue peut comprendre :
- une tige, qui est disposée coaxialement dans ledit passage de l'ensemble et dont une première extrémité est filetée et porte un écrou de serrage s'appliquant contre un fond dudit corps, opposé audit objet à éjecter ;
- un arbre de liaison, prolongeant coaxialement ladite tige et auquel est lié, par une première de ses extrémités, ledit objet ;
- un écrou fendu axialement, monté par vissage sur la seconde extrémité filetée dudit arbre et entourant la seconde extrémité de ladite tige en regard de celle filetée dudit arbre ;
- une bague de verrouillage, montée coulissante autour dudit écrou fendu pour le maintenir vissé sur ledit arbre ;
- un piston, entourant ladite bague et susceptible de coulisser le long dudit passage axial, ledit piston étant lié axialement à ladite bague de verrouillage ; et
- une source de puissance commandable, qui est associée audit corps et qui, lorsqu'elle est actionnée, déplace axialement ledit piston et ladite bague, laquelle libère ledit écrou fendu séparant ledit arbre, portant l'objet, de ladite tige.

Par exemple, ladite source de puissance commandable dudit mécanisme de retenue peut être du type pyrotechnique.

Les figures du dessin annexé feront bien comprendre comment l'invention peut être réalisée. Sur ces figures, des références identiques désignent des éléments semblables.

La figure 1 représente, en coupe axiale, un exemple de réalisation du dispositif d'éjection conforme à l'invention, en position initiale de stockage, pour laquelle ledit objet à éjecter est verrouillé sur le dispositif par le mécanisme de retenue.

Les figures 2, 3 et 4 représentent, en coupe axiale, les étapes successives du fonctionnement dudit dispositif après effacement commandé du mécanisme de retenue, jusqu'à sa position finale d'éjection pour laquelle l'objet est lancé.

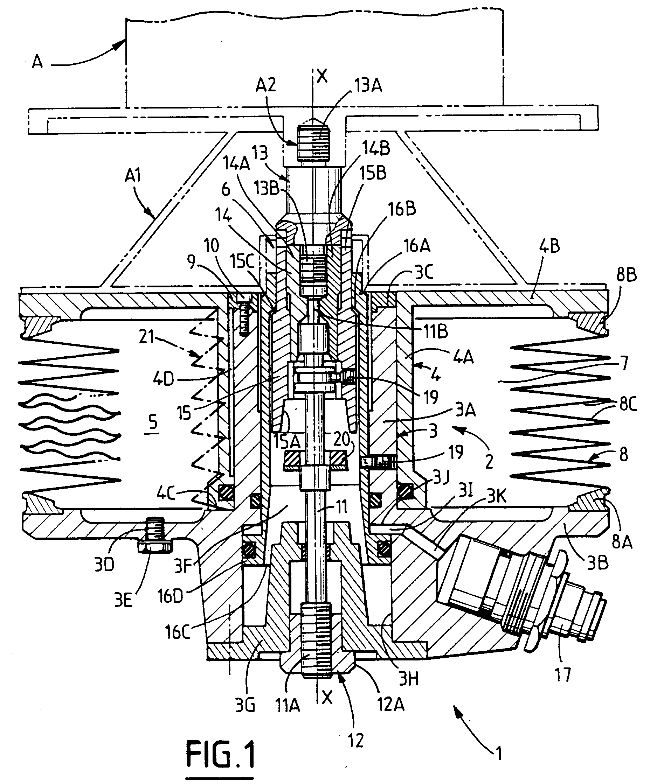

Le dispositif d'éjection 1 montré sur la figure 1 a pour but d'assurer le lancement, par voie pneumatique, d'un objet A du type par exemple défini précédemment, à partir d'une structure non représentée et pouvant être celle d'un satellite.

Le dispositif 1 comprend alors un ensemble coulissant 2, qui se compose d'un corps 3 associé à la structure et d'un organe coulissant 4 recevant l'objet A, des moyens pneumatiques 5 pour éjecter l'objet par coulissement de l'organe d'une position rentrée vers une position sortie, et un mécanisme de retenue commandable 6, verrouillant l'objet sur ledit organe 4 en position rentrée de celui-ci, et libérant l'objet dudit organe pour permettre l'actionnement des moyens d'éjection pneumatiques 5.

L'ensemble coulissant 2 présente une forme générale cylindrique à axe longitudinal X-X et l'organe déplaçable 4 correspond à un piston coulissant. Dans la position initiale dite de stockage du dispositif, illustrée sur la figure 1, l'organe 4 est en position rentrée par rapport au corps fixe 3.

Selon l'invention, les moyens d'éjection pneumatiques 5 du dispositif sont intégrés directement à l'ensemble coulissant 2, pour former avec celui-ci une capacité étanche 7 à volume variable, laquelle est située entre le corps 3 et l'organe 4 et qui contient un gaz sous pression dont les caractéristiques, notamment de pression, seront indiquées ultérieurement. Plus particulièrement, la capacité étanche 7 est délimitée par un soufflet 8 entourant, de façon sensiblement concentrique à l'axe X-X, l'ensemble 2 et fixé par ses extrémités 8A et 8B respectivement au corps 3 et à l'organe 4.

Comme le montre la figure 1, le corps 3 de l'ensemble présente une partie cylindrique 3A le long de laquelle peut coulisser l'organe 4 et qui se termine par une embase transversale 3B, élargie par rapport à la partie cylindrique 3A. Quant à l'organe 4, il présente, dans cet exemple de réalisation, une jupe cylindrique latérale 4A montée, de façon étanche, autour de la partie cylindrique 3A du corps et se terminant par un plateau transversal 4B, qui est alors parallèle à l'embase transversale 3B du corps et a un diamètre sensiblement identique à celui de l'embase. Ainsi, les extrémités 8A et 8B du soufflet sont fixées, avec étanchéité, au voisinage de la périphérie de l'embase 3B du corps et du plateau 4B de l'organe. La capacité étanche 7 présente alors un volume annulaire délimité par la jupe latérale 4A alors interne, le soufflet 8 alors externe et les plateau 4B et embase 3B de l'ensemble coulissant 2. On remarque par ailleurs sur la figure 1 que, dans la position initiale de stockage de l'ensemble 1, pour laquelle l'organe 4 est en position rentrée et le volume de la capacité 7 est minimal, la jupe latérale 4A de l'organe est sensiblement au contact de l'embase par sa face transversale d'extrémité 4C. En outre, une butée 9 est rapportée fixement par des vis 10 sur la face transversale d'extrémité 3C de la partie cylindrique 3A du corps, et elle s'engage dans une rainure longitudinale 4D, ménagée dans la jupe latérale 4A mais ne débouchant pas de la face transversale 4C. Cette butée 9 fait ainsi office de butée de fin de course pour l'organe coulissant 4 lorsqu'il passe de sa position rentrée vers sa position sortie sous l'action des moyens pneumatiques 5.

Concernant ces derniers, le remplissage de la capacité étanche 7 en air sous pression s'effectue par un orifice 3D prévu dans l'embase 3B du corps et obturé ensuite par un bouchon 3E. La pression intérieure, à laquelle la capacité étanche 7 est soumise lorsque le dispositif d'éjection 1 est en position initiale, est de l'ordre de 1 bar et elle correspond avantageusement à la pression atmosphérique, extérieure. Ainsi, les pressions intérieure et extérieure sont-elles identiques lorsque le dispositif est stocké au sol. Le soufflet externe 8 de la capacité est, par exemple, métallique et les plis 8C, qui le composent, se présentent sous la forme de zigzags ondulés, comme le montre partiellement la figure 1.

L'objet A à éjecter est rapporté sur le côté externe du plateau transversal 4B de l'organe, opposé à son côté interne recevant le soufflet, et il y est maintenu par le mécanisme de retenue 6. On voit, sur la figure 1, que l'objet A présente une base de support A1 s'appliquant sur le plateau transversal 4B de l'organe et que le mécanisme de retenue 6 est agencé dans un passage axial 3F traversant le corps 3 de l'ensemble pour verrouiller l'objet par rapport à l'ensemble, en le plaquant contre le plateau transversal 4B de l'organe coulissant.

Pour cela, le mécanisme de retenue 6 comprend une tige 11, un écrou de serrage 12 de la tige, un arbre de liaison 13, un écrou fendu axialement 14, une bague de verrouillage 15, un piston coulissant 16 et une source de puissance commandable 17.

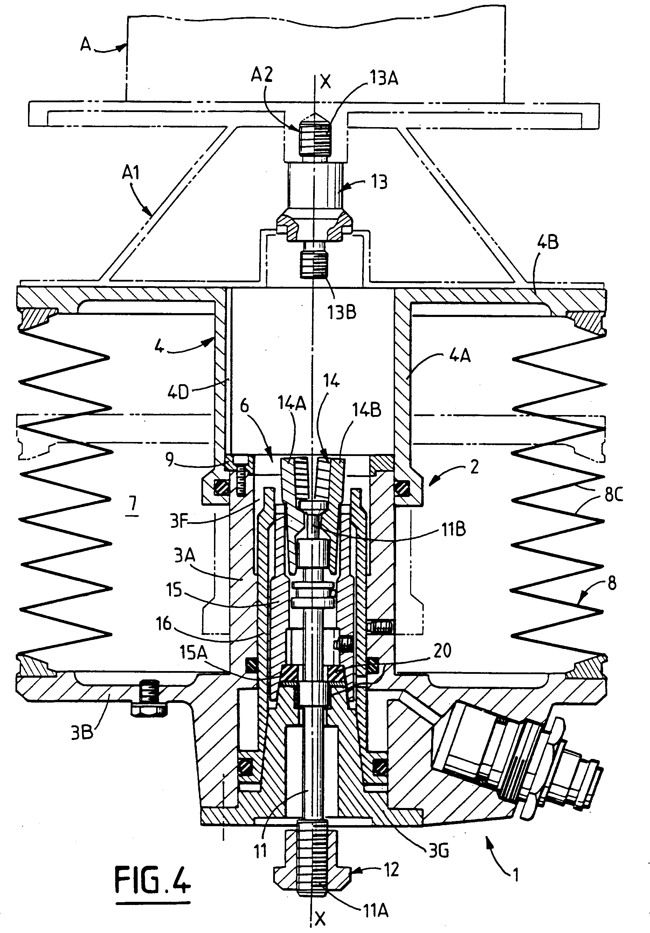

Plus particulièrement, comme le montre la figure 1, la tige 11 est logée coaxialement dans le passage 3F du corps et elle présente une première extrémité filetée 11A sur laquelle est vissé l'écrou de serrage 12. Ce dernier s'applique par un rebord externe 12A contre un fond 3G rapporté fixement sur l'embase 3B du corps et obturant le passage axial 3F. Par rapport au fond 3G de l'embase fixe, l'écrou 12, auquel est associée la tige, peut coulisser vers le bas comme on le verra sur la figure 4. La seconde extrémité 11B de la tige est lisse et émerge approximativement au même niveau que le plateau transversal 4B de l'organe 4. L'arbre de liaison 13 est situé dans le prolongement axial de l'extrémité libre 11B de la tige et présente des extrémités filetées 13A,13B. Ainsi, la première extrémité filetée 13A coopère avec un trou taraudé A2 ménagé dans la base de support A1 de l'objet A, tandis que la seconde filetée 13B est en regard de la seconde extrémité lisse 11B de la tige 11.

Ces deux extrémités en regard 11B et 13B sont réunies l'une à l'autre par l'écrou fendu 14 qui peut se composer de deux ou plusieurs parties identiques formant, lorsqu'elles sont mises les unes contre les autres, un écrou à part entière pour assurer la fixation souhaitée. Pour cela, la bague de verrouillage 15 entoure, de façon coulissante, la totalité de l'écrou fendu 14 et permet le maintien temporaire des parties constitutives de l'écrou, au nombre de deux 14A et 14B dans cet exemple de réalisation. Les parties de l'écrou ainsi maintenues en place sont conformées de façon appropriée pour s'appliquer par vissage autour de la seconde extrémité filetée 13B de l'arbre de liaison 13 et pour entourer, comme un palier, la seconde extrémité lisse 11B de la tige. La bague de verrouillage 15 s'étend au moins sur toute la longueur de l'écrou fendu pour assurer un maintien efficace en position de celui-ci. On remarque, sur la figure 1, que l'extrémité inférieure 15A de la bague présente une forme interne conique, tandis que son extrémité supérieure 15B est liée par emboîtement à l'arbre de liaison 13.

Le piston 16 entoure la bague de verrouillage 15 et il est monté coulissant et avec étanchéité dans le passage axial 3F du corps 3. Le piston 16 présente à son extrémité supérieure 16A, autour de laquelle est centrée la base de support A1 de l'objet, un rebord annulaire interne 16B qui s'applique sur un épaulement externe 15C ménagé sur la périphérie externe de la bague 15, de façon à établir ainsi une liaison axiale entre le piston et la bague. L'extrémité inférieure 16C du piston est élargie et elle se termine par un rebord annulaire externe 16D qui est monté, avec étanchéité, dans une partie correspondante élargie 3H du passage axial 3F. Ainsi, une chambre annulaire 3I est délimitée entre le rebord externe 16D du piston et le changement de section du passage 3F, formé par un épaulement 3J. Dans cette chambre débouche transversalement un conduit 3K qui est ménagé dans l'embase du corps et qui communique avec la source de puissance commandable 17 logée dans l'embase 3B. Cette source peut être du type pyrotechnique.

Lorsque tous les éléments du mécanisme de retenue 6 sont assemblés dans le passage axial 3F de l'ensemble 1, on comprend que le serrage de l'écrou 12, par son rebord externe 12A s'appliquant sur le fond 3G, provoque la mise en tension de la tige 11 et, donc, par l'intermédiaire de l'écrou fendu 14 et de l'arbre de liaison 13, l'application de la base de support A1 dudit objet contre le plateau 4B de l'organe coulissant qui est alors maintenu en position rentrée. Pour garantir une immobilisation totale du mécanisme de retenue 6 en position de verrouillage dudit objet et en position rentrée du piston, des vis cassables 19 sont radialement prévues entre le corps 3 et le piston 16, et entre la bague 15 et la tige 11. Par ailleurs, des éléments amortisseurs 20 sont agencés sur la tige 11 et sur le fond 3G pour absorber l'énergie de la bague et du piston, respectivement, due à leur déplacement, comme on le verra ci-après.

Dans une variante de réalisation illustrée partiellement sur la figure 1, la jupe latérale 4A dudit organe peut être remplacée par un soufflet auxiliaire interne 21 qui délimite alors, avec le soufflet externe, la capacité étanche 7.

Le fonctionnement du dispositif d'éjection 1 se déroule de la façon suivante.

On rappelle tout d'abord qu'il occupe la position initiale de stockage représentée sur la figure 1, pour laquelle le mécanisme de retenue 6 verrouille l'objet A sur l'organe coulissant 4 qui est en position rentrée dans le corps 3 dudit ensemble. De façon concomitante, la capacité étanche 7 présente un volume minimal, puisque l'organe coulissant est rentré, et elle renferme un gaz sous pression dont la pression intérieure est réglée pour être égale à la pression extérieure initiale correspondant à la pression atmosphérique. Ainsi, les pressions intérieure de la capacité et extérieure du milieu ambiant sont identiques et égales sensiblement à 1 bar. Grâce à cela, en cas d'un fonctionnement intempestif du mécanisme de retenue qui libérerait l'objet de l'ensemble, l'éjection dudit objet s'effectuera avantageusement avec une vitesse faible uniquement due à la force élastique des plis dudit soufflet passant d'une position repliée à une position déployée. De la sorte, les conséquences d'un dysfonctionnement du dispositif alors en position de stockage au sol sont minimisées.

Le dispositif d'éjection 1 est monté à bord d'un lanceur spatial (fusée, missile balistique, ...) ou d'un satellite, pour lancer l'objet en question selon une trajectoire prédéterminée lorsque la pression extérieure, en phase finale de vol, est environ de 0 bar, alors qu'en phase de stockage au sol, la pression extérieure est de 1 bar.

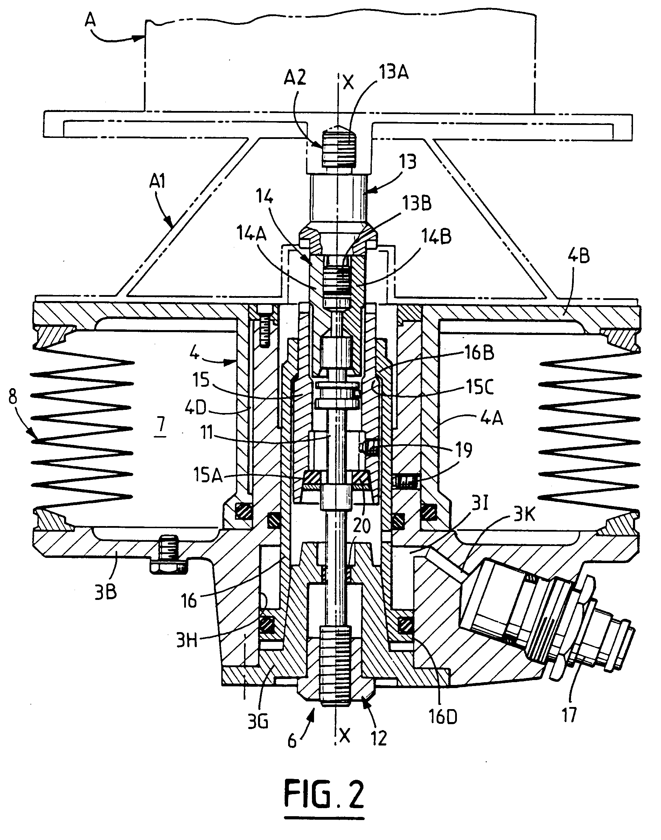

Le fonctionnement proprement dit est le suivant. Lorsque l'ordre d'éjection est donné, l'allumage de la source pyrotechnique 17 produit un jet de gaz sous pression à caractéristiques physiques connues, qui traverse le conduit 3K du corps pour déboucher dans la chambre annulaire 3I dudit passage axial. Sous l'action de la pression du jet gazeux s'appliquant sur le rebord externe 16D du piston, la vis cassable 19 reliant le corps au piston se rompt et ce dernier coulisse vers le fond 3G du corps et entraîne avec lui, dans son mouvement de descente, la bague de verrouillage 15 par la liaison axiale rebord interne 16B - épaulement externe 15C. L'extrémité inférieure 16C du piston, qui est conique, s'engage autour d'une partie correspondante conique du fond 3G, et l'autre vis cassable 19, qui relie radialement la bague 15 à la tige 11, se rompt également. La bague de verrouillage 15, dans son mouvement de descente, libère alors l'écrou fendu 14 et vient buter, par son extrémité conique 15A, contre l'amortisseur 20 lié à la tige. Le dispositif 1 occupe à ce moment la position illustrée sur la figure 2.

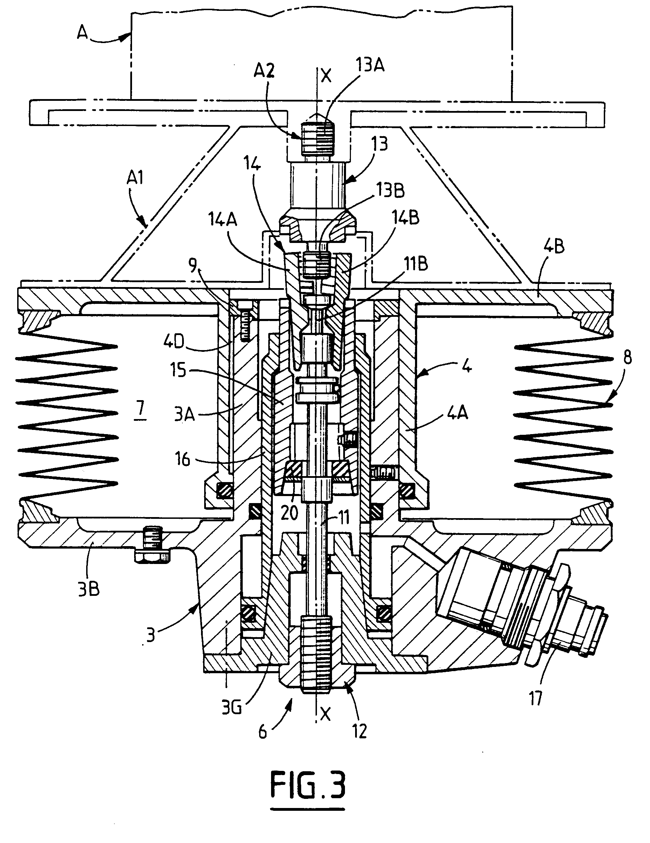

Simultanément au mouvement de descente de la bague 15, imposé par le piston 16, les parties 14A et 14B de l'écrou fendu, qui ne sont plus maintenues l'une contre l'autre, s'écartent l'une de l'autre et se désengagent de l'extrémité filetée 13B de l'arbre 13, comme le montre la figure 3. Et la tige 11, contre laquelle s'applique la bague, est entraînée à son tour dans le mouvement de descente pour s'emmancher dans l'autre amortisseur 20 prévu dans la partie conique du fond 3G. On remarque que l'extrémité lisse 11B de la tige se termine de façon évasée, ce qui permet, lors de son mouvement de descente, d'entraîner avec elle les parties de l'écrou 14 qui sont engagées sous cette extrémité évasée. Dès l'instant où l'arbre de liaison 13 est désengagé de l'écrou fendu, l'action de la capacité étanche sous pression 7 commence à agir en entraînant le coulissement de l'organe coulissant 4 par rapport au corps 3 fixé à la structure du satellite, par exemple. Sous l'action de la pression intérieure alors supérieure à la pression extérieure quasi-nulle, la capacité passe d'un volume minimal à un volume maximal en entraînant le coulissement de l'organe 4 de sa position rentrée vers sa position sortie. Le fond de la rainure 4D de l'organe s'applique contre la butée 9 solidaire du corps fixe 3. Sur la figure 4 représentant alors le dispositif 1 en position finale, l'objet A, auquel sont liés le support A1 et l'arbre 13 et qui n'est plus maintenu par le mécanisme de retenue 6, est par conséquent éjecté selon la trajectoire souhaitée à une vitesse longitudinale imprimée par la vitesse de coulissement de l'organe 4, qui est engendrée elle-même par l'action de la pression intérieure de la capacité étanche s'exerçant sur le plateau transversal de l'organe et par l'effort ressort des plis 8C du soufflet externe 8.

## Revendications

1. Dispositif pour éjecter, par voie pneumatique, un objet par rapport à une structure, du type comportant :
- un ensemble coulissant (2) qui comprend un corps (3), apte à être associé à ladite structure, et un organe déplaçable (4) monté sur ledit corps et apte à supporter ledit objet ;
- des moyens pneumatiques (5) pour éjecter ledit objet par coulissement dudit organe, portant l'objet, d'une position rentrée vers une position sortie, lesdits moyens d'éjection pneumatiques (5) étant intégrés audit ensemble coulissant (2) pour former avec celui-ci une capacité étanche (7), à volume variable, entre ledit organe (4) et ledit corps (3) ; et
- un mécanisme de retenue commandable (6), verrouillant ledit objet sur ledit organe, en position rentrée de celui-ci, et libérant ledit objet dudit organe pour l'actionnement desdits moyens d'éjection pneumatiques ;
caractérisé en ce que ladite capacité étanche (7) présente, en position de stockage dudit dispositif pour une pression extérieure initiale, un volume minimal sous une pression intérieure sensiblement identique à ladite pression extérieure initiale, et en position d'éjection, pour une pression extérieure finale inférieure à la pression extérieure initiale, un volume maximal sous l'action de ladite pression intérieure agissant sur ledit organe.

2. Dispositif selon la revendication 1,
caractérisé en ce que ladite capacité étanche (7) est délimitée par un soufflet externe (8), entourant ledit ensemble (2) et fixé, par ses extrémités, audit corps et audit organe, de façon étanche.

3. Dispositif selon la revendication 2,
caractérisé en ce que ledit soufflet externe (8) est métallique et en ce qu'il présente une section en zigzags.

4. Dispositif selon l'une des revendications 2 à 3,
caractérisé en ce que ledit corps (3) présente une partie cylindrique (3A), le long de laquelle peut coulisser ledit organe (4), et une embase (3B) qui termine ladite partie cylindrique et à laquelle est fixée, de façon étanche, l'une des extrémités dudit soufflet externe (8).

5. Dispositif selon la revendication 4,
caractérisé en ce que ledit organe coulissant (4) est monté autour de ladite partie cylindrique (3A) dudit corps et présente un plateau transversal (4B) sur lequel repose ledit objet à éjecter et auquel est fixée, de façon étanche, l'autre extrémité dudit soufflet (8).

6. Dispositif selon la revendication 5,
caractérisé en ce que ledit plateau (4B) dudit organe (4) se prolonge par une jupe cylindrique (4A) montée coulissante et de façon étanche le long de La partie cylindrique (3A) dudit corps.

7. Dispositif selon la revendication 5,
caractérisé en ce que, entre ledit plateau transversal (4B) de l'organe coulissant et ladite embase (3B) du corps, est agencé, de façon étanche, un soufflet auxiliaire interne(21) qui délimite avec ledit soufflet externe (8), le volume variable de ladite capacité étanche (7).

8. Dispositif selon l'une quelconque des revendications précédentes 1 à 7,
caractérisé en ce qu'une butée de fin de course (9) dudit organe coulissant (4) est prévue sur ledit corps (3).

9. Dispositif selon l'une quelconque des revendications précédentes 1 à 8,
caractérisé en ce que ledit mécanisme de retenue commandable (6) est agencé dans un passage axial (3F) traversant ledit ensemble (2), pour verrouiller ledit objet à éjecter sur l'organe coulissant dudit ensemble, en position rentrée.

10. Dispositif selon la revendication 9,
caractérisé en ce que ledit mécanisme de retenue (6) comprend :
- une tige (11), qui est disposée coaxialement dans ledit passage de l'ensemble et dont une première extrémité est filetée et porte un écrou de serrage (12) s'appliquant contre un fond dudit corps, opposé audit objet à éjecter ;
- un arbre de liaison (13), prolongeant coaxialement ladite tige et auquel est lié, par une première de ses extrémités, ledit objet ;
- un écrou fendu axialement (14), monté par vissage sur la seconde extrémité filetée dudit arbre et entourant la seconde extrémité de ladite tige en regard de celle filetée dudit arbre ;
- une bague de verrouillage (15), montée coulissante autour dudit écrou fendu pour le maintenir vissé sur ledit arbre ;
- un piston (16), entourant ladite bague et susceptible de coulisser le long dudit passage axial, ledit piston étant lié axialement à ladite bague de verrouillage ; et
- une source de puissance commandable (17), qui est associée audit corps et qui, lorsqu'elle est actionnée, déplace axialement ledit piston et ladite bague, laquelle libère ledit écrou fendu séparant ledit arbre, portant l'objet, de ladite tige.

11. Dispositif selon la revendication 10,
caractérisé en ce que ladite source de puissance commandable (17) dudit mécanisme de retenue (6) est du type pyrotechnique.

## Claims

1. Pneumatic device for ejecting an object from a structure, of the type including:
- a sliding assembly (2) which includes a body (3) adapted to be associated with said structure and a mobile member (4) mounted on said body and adapted to support said object;
- pneumatic means (5) for ejecting said object by sliding of said member carrying the object from a retracted position to a deployed position, said pneumatic ejector means (5) being integrated into said sliding assembly (2) to form with the latter a variable volume sealed space (7) between said member (4) and said body (3); and
- a selectively operable retaining mechanism (6) locking said object to said member in the retracted position of the latter and releasing said object from said member for the actuation of said pneumatic ejector means;
characterised in that said sealed space (7) has, in a storage position of said device, for an initial external pressure, a minimal volume at an internal pressure substantially identical to said initial external pressure and in an ejection position, for a final external pressure less than the initial external pressure, a maximal volume due to the action of said internal pressure operating on said member.

2. Device according to claim 1,
characterised in that said sealed space (7) is delimited by an external bellows (8) surrounding said assembly (2) and fixed and sealed at its ends to said body and to said member.

3. Device according to claim 2,
characterised in that said external bellows (8) is metallic and that it has a zigzag section.

4. Device according to claim 2 or claim 3,
characterised in that said body (3) has a cylindrical part (3A) along which said member (4) can slide and a base (3B) which terminates said cylindrical part and to which one end of said external bellows (8) is fixed and sealed.

5. Device according to claim 4,
characterised in that said sliding member (4) is mounted around said cylindrical part (3A) of said body and has a transverse plate (4B) on which said object to be ejected rests and to which the other end of said bellows (8) is fixed and sealed.

6. Device according to claim 5,
characterised in that said plate (4B) of said member (4) is extended by a cylindrical skirt (4A) sliding along and sealed to the cylindrical part (3A) of said body.

7. Device according to claim 5,
characterised in that a sealed internal auxiliary bellows (21) between said transverse plate (4B) of the sliding member and said base (3B) of the body delimits the variable volume of said sealed space (7) in conjunction with said external bellows (8).

8. Device according to any one of claims 1 to 7,
characterised in that an end stop (9) for said sliding member (4) is provided on said body (3).

9. Device according to any one of claims 1 to 8,
characterised in that said selectively operable retaining mechanism (6) is accommodated in an axial passage (3F) through said assembly (2) to lock said object to be ejected to the sliding member of said assembly in the retracted position.

10. Device according to claim 9,
characterised in that said retaining mechanism (6) includes:
- a rod (11) disposed coaxially in said passage of the assembly and a first end of which is screwthreaded and carries a clamping nut (12) pressed against a back wall of said body opposite said object to be ejected;
- a coupling shaft (13) coaxially extending said rod and to which a first end of said object is attached;
- an axially split nut (14) screwed onto the screwthreaded second end of said shaft and surrounding the second end of said rod facing the screwthreaded end of said shaft;
- a locking ring (15) sliding around said split nut to hold it screwed onto said shaft;
- a piston (16) surrounding said ring and adapted to slide along said axial passage, said piston being axially coupled to said locking ring; and
- a selectively operable power supply (17) which is associated with said body and which, when it is actuated, moves said piston and said ring axially, which releases said split nut, separating said shaft carrying the object from said rod.

11. Device according to claim 10, characterised in that said selectively operable power supply (17) of said retaining mechanism (6) is of the pyrotechnic type.

## Patentansprüche

1. Vorrichtung zum pneumatischen Auswerfen eines Objekts aus einer Struktur, derart, daß sie umfaßt:
- eine Gleiteinheit (2) mit einem Gehäuse (3), das mit der Struktur verbunden werden kann, und ein am Gehäuse angebrachtes bewegliches Organ (4) zur Aufnahme des Objekts;
- pneumatische Mittel (5), um das Objekt durch Gleiten des Organs mit Objekt aus einer eingefahrenen in eine ausgefahrene Stellung auszuwerfen, wobei die pneumatischen Auswurfmittel (5) in die Gleiteinheit (2) integriert sind und mit dieser einen dichten umschlossenen Raum (7) mit veränderlichem Volumen zwischen dem Organ (4) und dem Gehäuse (3) bilden; und
- einen steuerbaren Haltemechanismus (6), der das Objekt am Organ, wenn sich dieses in eingefahrener Stellung befindet, verriegelt und das Objekt zur Betätigung der pneumatischen Auswurfmittel vom Organ freigibt;
dadurch gekennzeichnet, daß der dichte umschlossene Raum (7) in Lagerungsstellung der Vorrichtung bei einem Anfangs-Außendruck und einem Innendruck, der etwa gleich dem Anfangs-Außendruck ist, ein Kleinstvolumen und in Auswurfstellung bei einem End-Außendruck, der kleiner als der Anfangs-Außendruck ist, durch den auf das Organ wirkenden Innendruck ein Größtvolumen aufweist.

2. Vorrichtung nach Anspruch 1,
dadurch gekennzeichnet, daß der dichte umschlossene Raum (7) durch einen äußeren Faltenbalg (8) begrenzt wird, der die Einheit (2) umgibt und mit seinen Enden dicht am Gehäuse und am Organ angebracht ist.

3. Vorrichtung nach Anspruch 2,
dadurch gekennzeichnet, daß der äußere Faltenbalg (8) aus Metall besteht und daß er einen zickzackformigen Querschnitt hat.

4. Vorrichtung nach einem der Ansprüche 2 bis 3,
dadurch gekennzeichnet, daß das Gehäuse (3) einen zylindrischen Teil (3A), an dem das Organ (4) gleiten kann, und am Ende des zylindrischen Teils einen Ansatz (3B) hat, an dem dicht abschließend eins der Enden des äußeren Faltenbalgs (8) angebracht ist.

5. Vorrichtung nach Anspruch 4,
dadurch gekennzeichnet, daß das Gleitorgan (4) um den zylindrischen Teil (3A) des Gehäuses herum angebracht ist und einen Querteller (4B) aufweist, auf dem das auszuwerfende Objekt aufliegt und an dem dicht abschließend das andere Ende des Faltenbalgs (8) angebracht ist.

6. Vorrichtung nach Anspruch 5,
dadurch gekennzeichnet, daß sich der Teller (4B) von Organ (4) in einem zylindrischen Mantel (4A) fortsetzt, der gleitend und dicht abschließend am zylindrischen Teil (3A) des Gehäuses montiert ist.

7. Vorrichtung nach Anspruch 5,
dadurch gekennzeichnet, daß zwischem dem Querteller (4B) des Gleitorgans und dem Ansatz (3B) des Gehäuses dicht abschließend ein innerer Hilfsfaltenbalg (21) angeordnet ist, der zusammen mit dem äußeren Faltenbalg (8) das veränderliche Volumen des dichten umschlossenen Raumes (7) bildet.

8. Vorrichtung nach einem der obigen Ansprüche 1 bis 7,
dadurch gekennzeichnet, daß am Gehäuse (3) ein Endanschlag (9) für das Gleitorgan (4) vorgesehen ist.

9. Vorrichtung nach einem der obigen Ansprüche 1 bis 8,
dadurch gekennzeichnet, daß der steuerbare Haltemechanismus (6) in einer axialen Durchführung (3F) der Gleiteinheit (2) angeordnet ist, um das auszuwerfende Objekt am Gleitorgan der Einheit in eingefahrener Stellung zu verriegeln.

10. Vorrichtung nach Anspruch 9,
dadurch gekennzeichnet, daß der Haltemechanismus (6) umfaßt:
- eine Stange (11), die koaxial in der Durchführung der Einheit angeordnet ist und von der ein erstes Ende ein Gewinde und eine Druckmutter (12) hat, die an einem dem auszuwerfenden Objekt entgegengesetzten Boden des Gehäuses anliegt;
- eine Verbindungswelle (13) als koaxiale Verlängerung der Stange, mit der das Objekt über ein erstes Ende verbunden ist;
- eine axial gespaltene Mutter (14), die auf das zweite Gewindeende der Welle aufgeschraubt ist und das zweite Ende der Stange gegenüber dem Gewindeende der Welle umgibt;
- einen Verriegelungsring (15), der gleitend um die Spaltmutter angebracht ist, um diese an der Welle angeschraubt zu halten;
- einen Kolben (16) um den Ring herum, der an der axialen Durchführung gleiten kann, wobei der Kolben axial mit dem Verriegelungsring verbunden ist; und
- eine steuerbare Leistungsquelle (17), die mit dem Gehäuse verbunden ist und bei Betätigung den Kolben und den Ring axial verschiebt, der die Spaltmutter freigibt, so daß die Welle mit dem Objekt von der Stange getrennt wird.

11. Vorrichtung nach Anspruch 10,
dadurch gekennzeichnet, daß die steuerbare Leistungsquelle (17) des Haltemechanismus (6) ein Sprengstoff ist.
